# EUROPEAN PATENT SPECIFICATION

(11) **EP 3 413 580 B1**
(45) Date of publication and mention of the grant of the patent: **24.07.2019**
(21) Application number: 17305659.9
(22) Date of filing: 05.06.2017
(51) Int. Cl.: H04Q 11/00

(54) **METHOD AND SYSTEM OF AVOIDING OPTICAL PACKET CONTENTION IN SYNCHRONOUS OPS MESH NETWORK**
VERFAHREN UND SYSTEM ZUR VERMEIDUNG VON DISPUTEN OPTISCHER PAKETE IN SYNCHRONEM OPS-MESH-NETZWERK
PROCÉDÉ ET SYSTÈME PERMETTANT D'ÉVITER LES CONFLITS DE PAQUETS OPTIQUES DANS UN RÉSEAU MAILLÉ OPS SYNCHRONE

(43) Date of publication of application: 12.12.2018
(73) Proprietor: Nokia Solutions and Networks Oy, 02610 Espoo (FI)
(72) Inventor: USCUMLIC, Bogdan, 91620 NOZAY (FR); BIGO, Sébastien, 91620 NOZAY (FR)
(74) Representative: Loyer & Abello

(56) References cited:
- US-A1- 2013 148 964
- HOFMEISTER R T ET AL: "DISTRIBUTED SOT SYNCHRONIZATION (DSS): A NETWORK-WIDE SLOT SYNCHRONIZATION TECHNIQUE FOR PACKET-SWITCHED OPTICAL NETWORKS", JOURNAL OF LIGHTWAVE TECHNOLOGY, IEEE SERVICE CENTER, NEW YORK, NY, US, vol. 16, no. 12, 1 December 1998 (1998-12-01), pages 2109-2115, XP000833957, ISSN: 0733-8724, DOI: 10.1109/50.736579
- IMRICH CHLAMTAC ET AL: "CORD: Contention Resolution by Delay Lines", IEEE JOURNAL ON SELECTED AREAS IN COMMUNICATIONS, IEEE SERVICE CENTER, PISCATAWAY, US, vol. 14, no. 5, 1 June 1996 (1996-06-01), XP011054495, ISSN: 0733-8716
- HUI ZANG ET AL: "Capacity allocation and contention resolution in a photonic slot routing all-optical WDM mesh network", JOURNAL OF LIGHTWAVE TECHNOLOGY, IEEE SERVICE CENTER, NEW YORK, NY, US, vol. 18, no. 12, 1 December 2000 (2000-12-01), pages 1728-1741, XP011450613, ISSN: 0733-8724, DOI: 10.1109/50.908704

## Description

### Field of the invention

The invention relates to the technical field of systems and methods for contention free operation of Optical Packet Switching (OPS) mesh networks.

### Background

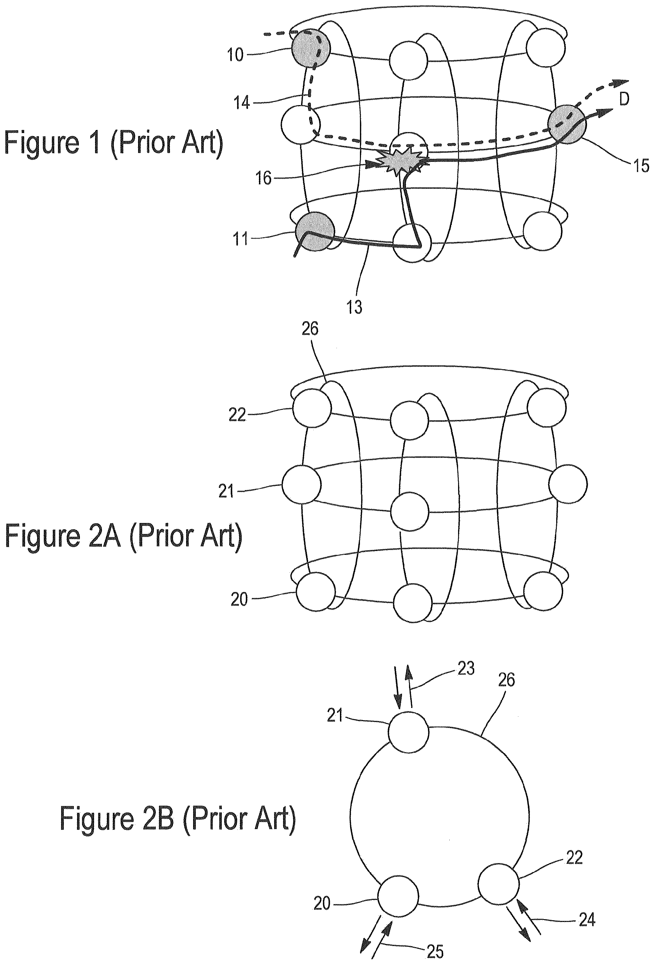

A key problem in an OPS mesh network is the contention. Contention occurs when two or more network nodes separately emit optical packets on the same wavelength channel, and these packets, which, once emitted, follow a predefined fixed optical route in the network, collide at some point in the network. The collision scenario is illustrated in Figure 1: an OPS mesh network is represented, where source nodes 10 and 11 send respective optical packets over paths 14 and 13 on the same wavelength channel toward destination node 15. Collision of optical packets is possible at an intermediate node 16 belonging to a shared part of paths toward destination station 15.

Prior art systems have provided for a centralized scheduler of decisions to insert optical packet, so as to avoid collisions. The centralized scheduling allocates each time slot to a packet with the appropriate (source, destination) pair.

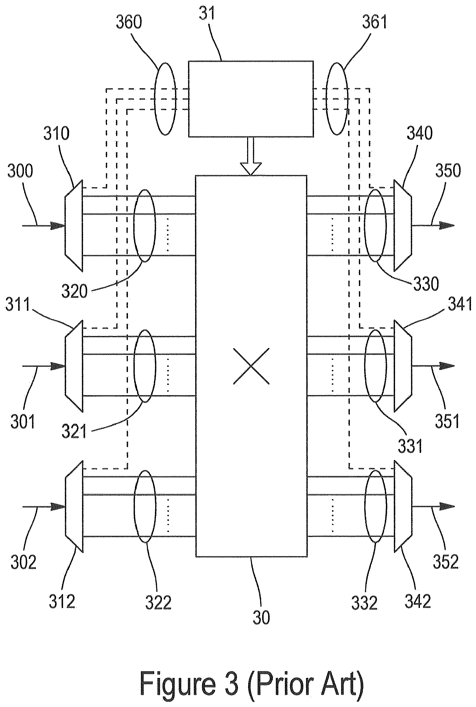

Prior art centralized scheduling however requires that the network have the centralized knowledge of the arriving traffic levels at each network node, and centrally apply a scheduling algorithm, calculating the right allocation of the available time slots to the optical packets. Then, the scheduling decision needs to be communicated to each node in the network. US 2013/148964 A1 discloses a technique for switching optical data by a node included in an optical communications network where the disclosure can be applied to numerous optical networks, such as for example an Optical Packet Switching, OPS, network. This prior art discloses a method of avoiding optical packet contention in a synchronous Optical Packet Switching mesh network operated at defined time slots (see Figs. 2 and 3), and comprising interconnected nodes (see Fig. 2), of which at least two source nodes emit optical packets on the same wavelength channel toward a single destination node, wherein the optical packets, once emitted, follow a predefined fixed optical route in the network. HOFMEISTER R T ET AL: "DISTRIBUTED SOT SYNCHRONIZATION (DSS): A NETWORK-WIDE SLOT SYNCHRONIZATION TECHNIQUE FOR PACKET-SWITCHED OPTICAL NETWORKS", JOURNAL OF LIGHTWAVE TECHNOLOGY, IEEE SERVICE CENTER, NEW YORK, NY, US, vol. 16, no. 12, 1 December 1998 (1998-12-01), pages 2109-2115, discloses a distributed slot synchronization for packet switched optical networks which coordinates node transmissions so that packets arrive aligned to one another at a reference point in the network. The technique is data rate and format independent and can be used in star, extended-ring, or tree-and-branch network architectures for metropolitan area networks and access applications.

### Summary

The present invention allows the contention free operation of an OPS mesh network with distributed scheduling, operating in time slotted (synchronous) manner.

The present invention addresses the contention in optical packet switched, synchronous networks. The synchronous network operation means that the optical packets are inserted, i.e. the network is operated at precisely defined time slots.

The present invention enables the distributed scheduling operation of the previously described network.

The present invention resolves the problem of contention in any optical packet switched network with mesh topology and synchronous network operation, operating with distributed scheduling. The benefits of the distributed scheduling operation are in light-weight control plane of the network, since the scheduling process is not needed to be calculated centrally, and with knowledge of current traffic demands at each network node.

More particularly, the invention comprises a method of avoiding optical packet contention in a synchronous OPS mesh network operated at defined time slots, and comprising interconnected nodes, of which at least two source nodes emit optical packets on the same wavelength channel toward a single destination, wherein the optical packets, once emitted, follow a predefined fixed optical route in the network, and wherein all nodes in the network are bidirectionally connected to a central photonic cross-connect for control information distribution (CID) so as to share control information, and further wherein all nodes in the network comprise delay means configured to introduce on demand a propagation delay of optical packets as a multiple of time slots; the method comprises the steps of:
- numbering time slots relative to the destination node;
- storing at source nodes the time slot numbering information;
- emitting a first group of optical packets at a first of the two source nodes, and broadcasting to the second of the two source nodes, control information including the time slot number of a first emitted optical packet, and the number of time slots used for the group; and
- emitting a second group of optical packets at the second of the two source nodes, using the delay means according to the received control information, so that no contention of optical packets occurs along the fixed optical route in the network.

In one embodiment of the method, the delay means introduce a propagation delay such that the second of the two source nodes has from destination node a physical distance different from that between the first of the two source nodes and the destination node.

In another embodiment of the method, the control information broadcasted by the first of the two source nodes further includes:
- information about the source node of the first group of optical packets;
- information about the destination node of the first group of optical packets; and
- information about the wavelength channel used for the first group of optical packets.

In yet another embodiment of the method, the step of numbering time slots relative to the destination node is performed at installation of the network, and each time the network is updated in size thereafter.

In embodiments, the method further comprises:
- updating at the second source node a local database as a function of the control information received from the first source node, wherein the control information defines the time slots used by the first source node for one or more destination nodes;
- determining at the second source node based on the updated local database, available time slots toward the one or more destination nodes; and
- selecting at the second source node one or more of the available time slots for emitting the second group of optical packets.

The invention also comprises a system of avoiding optical packet contention in a synchronous OPS mesh network operated at defined time slots, and comprising interconnected nodes, of which at least two source nodes emit optical packets on the same wavelength channel toward a single destination node, wherein the optical packets, once emitted, follow a predefined fixed optical route in the network, and wherein time slots relative to the destination node are numbered; the system comprises:
- a CID with which all nodes in the network are bidirectionally connected so as to share control information,
- delay means in all the nodes of the network, configured to introduce on demand a propagation delay of optical packets as a multiple of time slots,
- storing means in all the nodes of the network configured to store time slot numbering information;
- means, at the first of the two source nodes, configured to:
   - emit a first group of optical packets; and
      - broadcast to the second of the two source nodes, control information including the time slot number of a first emitted optical packet, and the number of time slots used for the group; and
- means, at the second of the two source nodes, configured to emit a second group of optical packets, using the delay means according to the received control information, so that no contention of optical packets occurs along the fixed optical route in the network.

In one embodiment of the system, the delay means comprise an on demand fiber length adjustment box.

In another embodiment of the system, the delay means comprise an on demand electronic buffering of data for propagation time adjustment.

In embodiments, the second source node further comprises a local database stored in the storing means and control means configured to:
- update the local database as a function of the control information received from the first source node, wherein the control information defines the time slots used by the first source node for one or more destination nodes;
- determine, based on the updated local database, available time slots toward the one or more destination nodes ; and
- select one or more of the available time slots for emitting the second group of optical packets.

The invention also comprises a node in a synchronous OPS mesh network operated at defined time slots, wherein optical packets, once emitted by the node to a destination node, follow a predefined fixed optical route in the network, and wherein time slots relative to the destination node are numbered; the node comprises:
- means configured to bidirectionally connect to a CID so as to share control information with other nodes in the network;
- means configured to store network time slot numbering information;
- means configured to emit a first group of optical packets on a given wavelength channel toward a destination node;
- means configured to broadcast to other nodes in the network, control information including the time slot number of the first emitted optical packet, and the number of time slots used for the group;
- means configured to introduce on demand a propagation delay of optical packets as a multiple of time slots;
- means configured to receive control information about a second group of optical packets emitted by another node in the network on the same wavelength channel to the same destination node; and
- means configured to, in response to the received control information, emit a third group of optical packets on the same wavelength channel to the same destination node, using the means configured to introduce a propagation delay, so that no contention of optical packets occurs along the fixed optical route in the network.

In embodiments, the node further comprises a local database stored in the storing means and control means configured to:
- update the local database as a function of the control information received from the other node, wherein the control information defines the time slots used by the other node for one or more destination nodes;
- determine, based on the updated local database, available time slots toward the one or more destination nodes ; and
- select one or more of the available time slots for emitting the third group of optical packets.

### Brief description of the drawings

These and other aspects of the invention will be apparent from and elucidated with reference to the embodiments described hereinafter, by way of examples, with reference to the drawings.
Figure 1 (Prior art) illustrates a collision scenario in an OPS mesh network.
Figure 2A (Prior art) shows a known 2-D BOSS network topology.
Figure 2B (Prior art) shows a known BOSS ring.
Figure 3 (Prior art) shows a known BOSS node architecture.
Figure 4 represents a BOSS network topology according to the embodiment.
Figure 5A represents a BOSS node architecture according to the invention in a first embodiment.
Figure 5B represents a BOSS node architecture according to the invention in a second embodiment.
Figure 6 illustrates distributed scheduling operations in a BOSS network according to the invention.
Figure 7 provides a time diagram of network functioning according to the invention.

### Detailed description of the embodiments

In the following, invention embodiments are discussed around the example of a 2-D Burst Optical Slot Switching (BOSS) torus, without loss of invention generality.

Figure 2A (Prior art) shows a known 2-D BOSS network topology. It comprises BOSS nodes, including BOSS nodes 20, 21 and 22, interconnected by BOSS rings in two dimensions, with BOSS ring 26 interconnecting BOSS nodes 20, 21 and 22.

Such a BOSS ring 26 is further represented on Figure 2B (Prior art). Data flows 25, 23 and 24 respectively circulate to and from clients on links with data switches respectively with BOSS nodes 20, 21 and 22.

Figure 3 (Prior art) shows a known BOSS node architecture. Three Input Fibers 300, 301 and 302 only are represented, with only three Output Fibers 350, 351 and 352. When such a node belongs to an n-D BOSS network topology, the total number of input/output fibers is k, where k >= n (k>n when more than a single optical fiber is implemented in some of torus dimensions).

Input Fibers 300, 301 and 302 conceptually each enter a Demultiplexer 310, 311 and 312, with each such Demultiplexer outputting a set of Input Data Channels 320, 321, and 322.

Input Data Channels 320, 321, and 322 enter an Optical Switch 30.

Sets of Output Data Channels 330, 331, 332 conceptually each enter a Multiplexer 340, 341 and 342, with each such Multiplexer outputting respectively Output Fibers 350, 351 and 352.

Optical Switch 30 performs data extraction function from Input Data Channels 320, 321, and 322, switching, and data insertion function into Output Data Channels 330, 331, 332.

Demultiplexers 310, 311 and 312 conceptually also output Input Control Channels 360, which are extracted by a Channel Control Unit 31. Channel Control Unit 31 controls the functions of Optical Switch 30, and inserts Output Control Channels 361, which input Multiplexer 340, 341 and 342 respectively. Thus Control Channels 360 and 361 are used in the BOSS node in a known role of synchronization, OAM functionality, etc.

Channels in the context of an OPS mesh network do not have to be different optical fibers, but may also be different wavelengths transported by optical fibers.

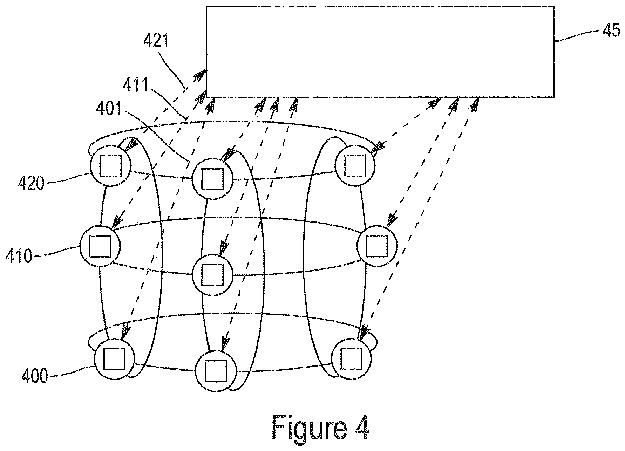

Figure 4 represents a BOSS network topology according to the embodiment. In the context of a 2-D BOSS network topology, it comprises BOSS nodes according to the embodiment, including BOSS nodes 400, 410 and 420, interconnected by BOSS rings in two dimensions.

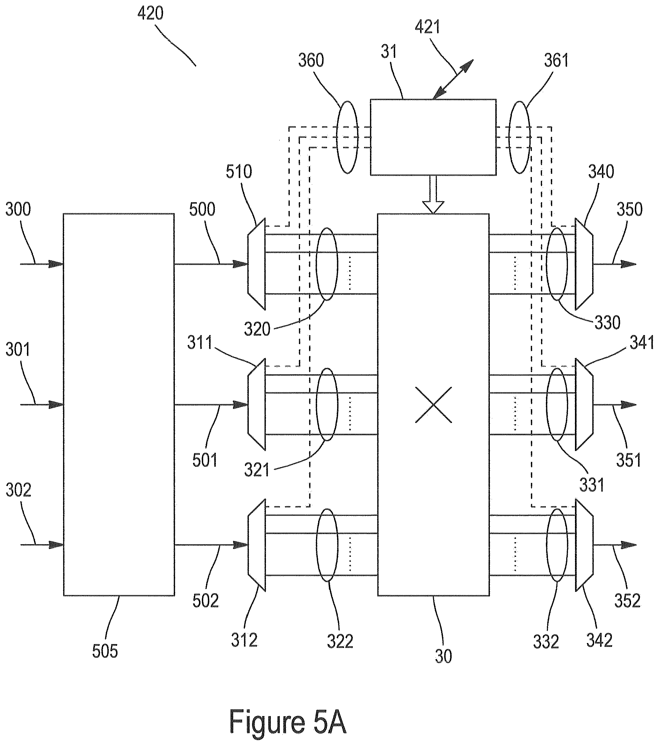

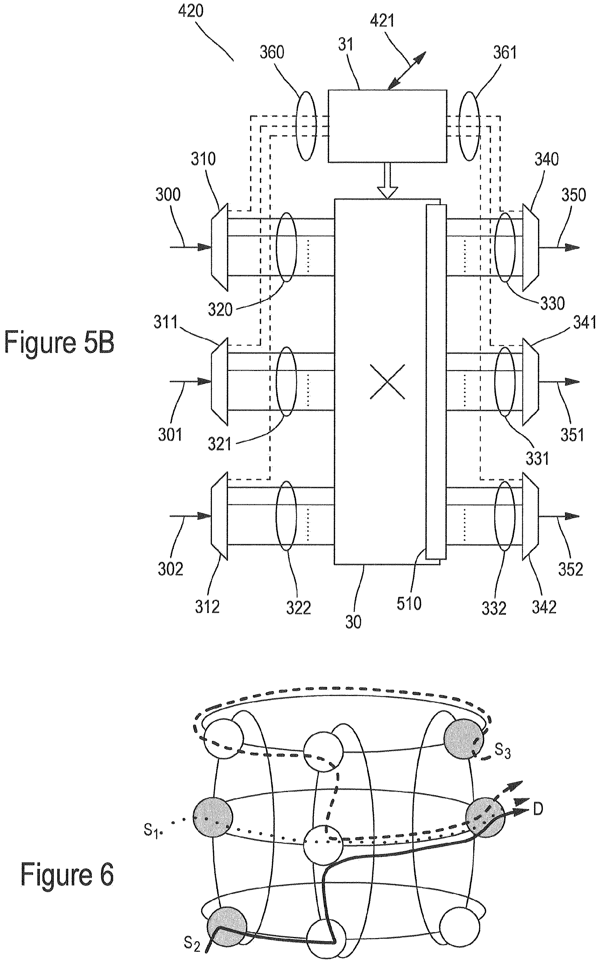

BOSS nodes according to the embodiment are described in relation to Figures 5A and 5B.

A new component in the network architecture is being introduced as a central photonic cross-connect for control information distribution, or CID 45.

All BOSS nodes in the network are connected to CID 45 through new dedicated bidirectional optical fibers, including Control Fibers 401, 411 and 421, that connect respectively BOSS nodes 400, 410 and 420 to CID 45.

CID 45 performs the spatial and spectral (wavelength) switching between incoming and outgoing optical fibers.

Figure 5A represents BOSS node architecture according to the invention in a first embodiment, in the context of a 2-D BOSS network topology. BOSS node 420 is represented as an example. Other Reference numerals that are identical to that of other Figures are for elements with identical structure and function.

A new on demand fiber length adjustment box LAB 505 is introduced, receiving as inputs Input Fibers 300, 301 and 302, and outputting respectively Intermediate Fibers 500, 501 and 502, which enter respectively Demultiplexers 310, 311 and 312.

Control Fiber 421 is connected to Channel Control Unit 31 so that control information may be exchanged with CID 45.

LAB 505 allows adjusting lengths between all sources and destinations in the BOSS network topology, and is used to ensure that all sources have different physical distances, observed from a given destination, in other words, that from the point of view of a single destination, each source has a unique distance with that destination. This enables the proper functioning of the BOSS network with a distributed scheduling algorithm according to the embodiment.

LAB 505 comprises two components:
- a pool of fiber delay lines of different lengths; the lengths of fiber delay lines are typically equal to distances corresponding to various multiples of time slot duration in the synchronous network ;
- a pool of optical switching hardware, capable of spatially connecting Input Fibers 300, 301 and 302 to the chosen fiber delay lines, and thus extending their length.

By using LAB 505, each node can participate in adjusting the distances in the network, so that there are no two different sources having the same physical distance toward the same destination.

Finally, LAB 505 may be reconfigured on demand in case of BOSS network topology change; at any point in time, LAB 505's configuration matches time slot numbering information, kept in a local database at each node.

Figure 5B represents BOSS node architecture according to the invention in a second embodiment, in the context of a 2-D BOSS network topology. BOSS node 420 is represented as an example. Other Reference numerals that are identical to that of other Figures are for elements with identical structure and function.

Instead of using LAB 505 as described previously, the embodiment makes use of a new on demand electronic buffering for the propagation time adjustment EBF 510 component.

EBF 510 creates a data buffering capability at the interface with Output Data Channels 330, 331, and 332. This allows adjusting the source-destination distances electronically, and adjusting propagation time between all sources and destinations. This capability in turn allows to ensure that all sources have different propagation times, observed from a given destination, i.e. that there are no two different sources having the same propagation time toward the same destination in the network.

Finally, EBF 510 may be reconfigured on demand in case of BOSS network topology change; at any point in time, EBF 510's configuration matches time slot numbering information, kept in a local database at each node.

The operation of structures as in Figures 4, 5A and 5B will now be described.

The BOSS network topology according to Figure 4 allows to timely transport control information between sources and destinations. Through Control Fibers 401, 411 and 421, and all other dedicated bidirectional optical fibers between BOSS nodes and CID 45, a separate physical infrastructure is created in the network for control information exchange. Control information is carried "out-of-band", i.e. over dedicated physical infrastructure/communication channels, that are not shared with control channels used for data information transmission, i.e. Input Control Channels 360, and Output Control Channels 361.

"Out of band" signaling in addition allows to save network resources. Indeed, even though control channels (contrary to data channels) are systematically converted to the electronic domain, and then resent as the optical signals, which is an energy consuming operation and demands use of dedicated optical interfaces for the reception and sending the optical signal, the number of "out-of-band" control channels is significantly smaller than the number of data channels, thus enabling savings in network energy and hardware.

When inserting data into Output Data Channels 330, 331, 332, each source in the network uses its dedicated connection to CID 45 to broadcast the information to all concurrent sources.

Control information is transmitted from each source by means of a broadcast transport model, i.e. transported over a tree topology.

Other means than Control Fibers 401, 411 and 421 are possible for the realization of dedicated physical infrastructure for carrying control information, without departing from the scope of the invention. For example, control information may be routed over the same optical fibers as data information, over a mesh topology but using the separate wavelength channels than those used by data information, or control information may be broadcasted by means of wireless communication.

The network architecture according to the invention ensures that control information reaches all concurrent sources of a given destination.

In one embodiment, control information consists of, at a minimum:
- information about the source of optical packet
- information about the destination of optical packet
- information about the wavelength channel used for the optical packet
- information about the time slot number (relative to destination), in which the inserted optical packet is transported.

This information enables the effective use of the broadcasted control information to prevent the optical packet collisions in the network.

According to the invention, time slots in the synchronous network are numbered. Numbering of slots is provided by a centralized control plane (not shown) and is performed only once, when the network is first installed.

Indeed, since the physical distance between each source and destination in the synchronous network is known, and is a multiple of time slots, numbering of slots may be done only once, and the numbering information shared with all nodes in the network.

If however the network is updated in size by adding new nodes or links, or in case of failures, time slot numbering is updated.

Numbering time slots equates to giving each of them a unique number, in order to leverage the distributed scheduling operation in the network, without packet losses, i.e. without packet collisions.

Time slot numbering is performed individually, for each destination: this means that one time slot may have a different numbers when used by a different destination.

Information regarding time slot numbering (at installation, or later updated) is kept in a node's local database.

CID 45 combined with LAB 505 or EBF 510, and time slot numbering allows:
- each source in the network to have the information of scheduling decisions of previous sources inserting the data frame in the same time slot (observed from a destination) ;
- to have distances from source to destination all different.

According to the invention, the scheduling of packets is performed in a distributed manner: each source has a full freedom to choose among the available time slots for the insertion of optical packets.

In the same time slot when the insertion of the optical packet is performed, the source will notify the other sources of the same destination about the number of slots that it has used for the emission. The notification will be broadcasted by the control information channels.

An appropriate distributed scheduling algorithm may be for example Round Robin scheduling or MaxWeight scheduling algorithms, with the following characteristics:
- the node's local database containing control information of the current time slot used by concurrent sources toward the same destination must be updated, for each destination;
- based on the updated control information, the available time slots and wavelengths toward a destination are identified, for each destination ; and
- scheduling decision is calculated locally, about time slot, wavelength, which destination the optical packet shall be inserted in the current time slot; this is done for the entire set of destinations reachable by a given source.

Figure 6 illustrates distributed scheduling operations in a BOSS network according to the embodiment.

Three sources (S1, S2 and S3) insert optical packets on the same shared channel, toward destination D. For the sake of clarity, all represented rings are assumed to be unidirectional, and all represented links assured to have the same length, equal to a single time slot duration. According to the embodiment, the three sources S1, S2 and S3, are as far from destination D as 2, 3 or 4 links, respectively.

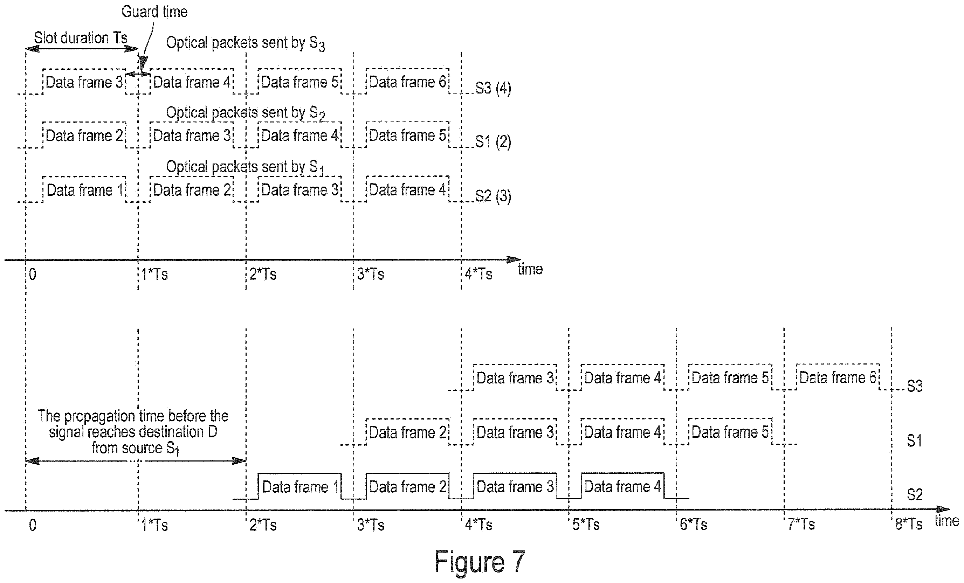

Figure 7 provides a time diagram of network functioning according to the embodiment, for the optical packet sending from sources as in Figure 6.

If data frames (optical packets) have the same number and are aligned at destination, as shown in the lower part of Figure 7, data frames are not aligned at the time of insertion. For example data frame 3 is sent at time 0 from source S3, at time 1*TS from source S1, and at time 2*TS from source S2.

According to the embodiment:
- source S2 has the information about the scheduling decision of source S3 at time 1*TS, and source S1 the scheduling decisions of sources S2 and S3, at time moment 2*TS hence, a distributed scheduling is made possible;
- different sources have different distances to common destination, and no collision of data frames happens in the network.

According to the embodiment avoiding contention in the network completely eliminates the possibility of a contention. As a consequence, the network is "loss-less" in operation. Indeed, once inserted, the optical packet reaches its destination without collision with other optical packets, and thus cannot be lost.

The above may also be applied to optical burst switching ("burst" = "large packet"), and optical sub-wavelength switching networks, over a mesh topology, and with synchronous operation, without departing from the scope of this invention.

Elements such as BOSS nodes (400, 410, 420) or CID (45) could each be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method of avoiding optical packet contention in a synchronous Optical Packet Switching mesh network operated at defined time slots, and comprising interconnected nodes, of which at least two source nodes (S1, S2) emit optical packets on the same wavelength channel toward a single destination node (D),
wherein the optical packets, once emitted, follow a predefined fixed optical route in the network,
and, the method is further **characterized in that**, wherein all nodes in the network are bidirectionally connected (401, 411, 421) to a central photonic cross-connect for control information distribution (45) so as to share control information,
and further wherein all nodes in the network comprise delay means (505, 510) configured to introduce on demand a propagation delay of optical packets as a multiple of time slots,
the method comprising the steps of:
- numbering time slots relative to the destination node (D);
- storing at source nodes (S1, S2) the time slot numbering information;
- emitting a first group of optical packets at a first of the two source nodes (S1), and broadcasting to the second of the two source nodes, control information including the time slot number of a first emitted optical packet, and the number of time slots used for the first group; and
- emitting a second group of optical packets at the second of the two source nodes (S2), using the delay means (505, 510) according to the received control information, so that no contention of optical packets occurs along the fixed optical route in the network.

2. The method of claim 1, wherein delay means (505, 510) introduce a propagation delay such that the second of the two source nodes (S2) has from destination node (D) a physical distance different from that between the first of the two source nodes (S1) and the destination node (D).

3. The method of claim 1 or 2, wherein the control information broadcasted by the first of the two source nodes (S1) further includes:
- information about the source node of the first group of optical packets;
- information about the destination node of the first group of optical packets; and
- information about the wavelength channel used for the first group of optical packets.

4. The method of any of the claims 1 to 3, wherein the step of numbering time slots relative to the destination node (D) is performed at installation of the network, and each time the network is updated in size thereafter.

5. The method according to any one of claims 1 to 4, further comprising:
• updating at the second source node a local database as a function of the control information received from the first source node, wherein the control information defines the time slots used by the first source node for one or more destination nodes;
• determining at the second source node based on the updated local database, available time slots toward the one or more destination nodes ; and
• selecting at the second source node one or more of the available time slots for emitting the second group of optical packets.

6. A system of avoiding optical packet contention in a synchronous Optical Packet Switching mesh network operated at defined time slots, and comprising interconnected nodes, of which at least two source nodes (S1, S2) emit optical packets on the same wavelength channel toward a single destination node (D),
wherein the optical packets, once emitted, follow a predefined fixed optical route in the network,
and wherein time slots relative to the destination node (D) are numbered,
the system comprising:
- a central photonic cross-connect for control information distribution (45) with which all nodes in the network are bidirectionally connected (401, 411, 421) so as to share control information,
- delay means (505, 510) in all the nodes of the network, configured to introduce on demand a propagation delay of optical packets as a multiple of time slots,
- storing means in all the nodes of the network configured to store time slot numbering information;
- means, at the first of the two source nodes (S1), configured to:
- emit a first group of optical packets; and
- broadcast to the second of the two source nodes, control information including the time slot number of a first emitted optical packet, and the number of time slots used for the first group; and
- means, at the second of the two source nodes (S2), configured to emit a second group of optical packets, using the delay means (505, 510) according to the received control information, so that no contention of optical packets occurs along the fixed optical route in the network.

7. The system of claim 6, in which the delay means (505, 510) comprise an on demand fiber length adjustment box (LAB 505).

8. The system of claim 6 in which the delay means (505, 510) comprise an on demand electronic buffering of data for propagation time adjustment (EBF 510).

9. The system according to any one of claims 5 to 8, wherein the second source node (S2) further comprises a local database stored in the storing means and control means configured to:
• update the local database as a function of the control information received from the first source node, wherein the control information defines the time slots used by the first source node for one or more destination nodes;
• determine, based on the updated local database, available time slots toward the one or more destination nodes; and
• select one or more of the available time slots for emitting the second group of optical packets.

10. A node (S1, S2) in a synchronous Optical Packet Switching mesh network operated at defined time slots, wherein optical packets, once emitted by the node to a destination node (D), follow a predefined fixed optical route in the network,
and wherein time slots relative to the destination node (D) are numbered, the node **characterized in that** it further comprises:
- means configured to bidirectionally connect (401, 411, 421) to a central photonic cross-connect for control information distribution (45) so as to share control information with other nodes in the network;
- storing means configured to store network time slot numbering information;
- means configured to emit a first group of optical packets on a given wavelength channel toward a destination node (D);
- means configured to broadcast to other nodes in the network, control information including the time slot number of the first emitted optical packet, and the number of time slots used for the group;
- means (505, 510) configured to introduce on demand a propagation delay of optical packets as a multiple of time slots;
- means configured to receive control information about a second group of optical packets emitted by another node in the network (S2) on the same wavelength channel to the same destination node (D); and
- means configured to, in response to the received control information, emit a third group of optical packets on the same wavelength channel to the same destination node (D), using the means (505, 510) configured to introduce a propagation delay, so that no contention of optical packets occurs along the fixed optical route in the network.

11. The node (S1, S2) according to claim 10, further comprising a local database stored in the storing means and control means configured to:
• update the local database as a function of the control information received from the other node, wherein the control information defines the time slots used by the other node for one or more destination nodes;
• determine, based on the updated local database, available time slots toward the one or more destination nodes; and
• select one or more of the available time slots for emitting the third group of optical packets.

## Patentansprüche

1. Verfahren zur Vermeidung von Konflikten optischer Pakete in einem synchronen optischen Paketvermittlungsnetzwerk, das zu definierten Zeitschlitzen betrieben wird und miteinander verbundene Knoten umfasst, von denen mindestens zwei Quellknoten (S1, S2) optische Pakete auf dem gleichen Wellenlängenkanal in Richtung zu einem einzelnen Zielknoten (D) emittieren,
wobei optischen Pakete, sobald sie emittiert sind, einer vordefinierten festen optischen Route im Netzwerk folgen,
und das Verfahren ferner **dadurch gekennzeichnet, dass**
wobei alle Knoten im Netzwerk bidirektional mit einer zentralen photonischen Querverbindung (401, 411, 421) zur Steuerinformationsverteilung (45) verbunden sind, um Steuerinformationen gemeinsam zu nutzen,
und wobei ferner alle Knoten im Netzwerk Verzögerungsmittel (505, 510) umfassen, die konfiguriert sind, bei Bedarf eine Ausbreitungsverzögerung von optischen Paketen als ein Vielfaches von Zeitschlitzen einzuführen,
wobei das Verfahren die Schritte umfasst:
- Nummerieren der Zeitschlitze in Bezug auf den Zielknoten (D);
- Speichern der Zeitschlitznummerierungsinformationen an den Quellknoten (S1, S2);
- Emittieren einer ersten Gruppe von optischen Paketen an einem ersten der zwei Quellknoten (S1), und Rundsenden von Steuerinformationen, einschließlich der Zeitschlitznummer eines ersten emittierten optischen Pakets, und der Nummer eines für die erste Gruppe verwendeten Zeitschlitzes, an den zweiten der zwei Quellknoten; und
- Emittieren einer zweiten Gruppe von optischen Paketen an dem zweiten der zwei Quellknoten (S2) unter Verwendung der Verzögerungsmittel (505, 510) gemäß der empfangenen Steuerinformationen, so dass kein Konflikt optischer Pakete entlang der festen optischen Route im Netzwerk auftritt.

2. Verfahren nach Anspruch 1, wobei die Verzögerungsmittel (505, 510) eine Ausbreitungsverzögerung einführen, so dass der zweite der zwei Quellknoten (S2) eine physikalische Distanz zu dem Zielknoten (D) aufweist, die sich von der zwischen dem ersten der zwei Quellknoten (S1) und dem Zielknoten (D) unterscheidet.

3. Verfahren nach Anspruch 1 oder 2, wobei die von dem ersten der zwei Quellknoten (S1) rundgesendeten Steuerinformationen ferner aufweisen:
- Informationen über den Quellknoten der ersten Gruppe von optischen Paketen;
- Informationen über den Zielknoten der ersten Gruppe von optischen Paketen; und
- Informationen über den Wellenlängenkanal, der für die erste Gruppe von optischen Paketen verwendet wird.

4. Verfahren nach einem der Ansprüche 1 bis 3, wobei der Schritt des Nummerierens von Zeitschlitzen in Bezug auf den Zielknoten (D) bei der Installation des Netzwerks und danach jedes Mal, wenn das Netzwerk in der Größe aktualisiert wird, durchgeführt wird.

5. Verfahren nach einem der Ansprüche 1 bis 4, ferner umfassend:
• Aktualisieren, an dem zweiten Quellknoten, einer lokalen Datenbank in Abhängigkeit von den von dem ersten Quellknoten empfangenen Steuerinformationen, wobei die Steuerinformationen die von dem ersten Quellknoten für einen oder mehrere Zielknoten verwendeten Zeitschlitze definieren;
• Bestimmen, an dem zweiten Quellknoten basierend auf der aktualisierten lokalen Datenbank, der verfügbaren Zeitschlitze für den einen oder die mehreren Zielknoten; und
• Auswählen, an dem zweiten Quellknoten, eines oder mehrerer der verfügbaren Zeitschlitze zum Emittieren der zweiten Gruppe von optischen Paketen.

6. System zur Vermeidung von Konflikten optischer Pakete in einem synchronen optischen Paketvermittlungsnetzwerk, das zu definierten Zeitschlitzen betrieben wird und verbundene Knoten umfasst, von denen mindestens zwei Quellknoten (S1, S2) optische Pakete auf dem gleichen Wellenlängenkanal in Richtung zu einem einzelnen Zielknoten (D) emittieren,
wobei die optischen Pakete, sobald sie emittiert sind, einer vordefinierten festen optischen Route im Netzwerk folgen,
und wobei Zeitschlitze in Bezug auf den Zielknoten (D) nummeriert sind, wobei das System umfasst:
- eine zentrale photonische Querverbindung zur Steuerinformationsverteilung (45), mit der alle Knoten im Netzwerk bidirektional verbunden (401, 411, 421) sind, um Steuerinformationen gemeinsam zu nutzen,
- Verzögerungsmittel (505, 510) in allen Knoten des Netzwerks, die konfiguriert sind, bei Bedarf eine Ausbreitungsverzögerung von optischen Paketen als ein Vielfaches von Zeitschlitzen einzuführen,
- Speichermittel in allen Knoten des Netzwerks, die konfiguriert sind, Zeitschlitznummerierungsinformationen zu speichern;
- Mittel, an dem ersten der zwei Quellknoten (S1), die konfiguriert sind zum:
- Emittieren einer erste Gruppe von optischen Paketen; und
- Rundsenden von Steuerinformationen, einschließlich der Zeitschlitznummer eines ersten emittierten optischen Pakets, und der Anzahl der für die erste Gruppe verwendeten Zeitschlitze an den zweiten der zwei Quellknoten; und
- Mittel, an dem zweiten der zwei Quellknoten (S2), die konfiguriert sind, eine zweite Gruppe von optischen Paketen unter Verwendung der Verzögerungsmittel (505, 510) gemäß den empfangenen Steuerinformationen zu emittieren, so dass kein Konflikt optischer Pakete entlang der festen optische Route im Netzwerk auftritt.

7. System nach Anspruch 6, wobei die Verzögerungsmittel (505, 510) eine Box (LAB 505) zur bedarfsgesteuerten Faserlängenanpassung umfassen.

8. System nach Anspruch 6, wobei die Verzögerungsmittel (505, 510) ein elektronisches Puffern von Daten zur bedarfsgesteuerten Laufzeitanpassung (EBF 510) umfassen.

9. System nach einem der Ansprüche 5 bis 8, wobei der zweite Quellknoten (S2) ferner eine lokale Datenbank umfasst, die in den Speichermitteln gespeichert ist, und Steuermittel, die konfiguriert sind zum:
• Aktualisieren der lokalen Datenbank in Abhängigkeit von den von dem ersten Quellknoten empfangenen Steuerinformationen, wobei die Steuerinformationen die von dem ersten Quellknoten für einen oder mehrere Zielknoten verwendeten Zeitschlitze definieren;
• Bestimmen, basierend auf der aktualisierten lokalen Datenbank, von verfügbaren Zeitschlitzen für einen oder mehrere Zielknoten; und
• Auswählen einer oder mehrerer der verfügbaren Zeitschlitze zum Emittieren der zweiten Gruppe von optischen Paketen.

10. Knoten (S1, S2) in einem synchronen optischen Paketvermittlungsnetzwerk, das in definierten Zeitschlitzen betrieben wird, wobei optische Pakete, sobald sie von dem Knoten an einen Zielknoten (D) emittiert sind, einer vordefinierten festen optischen Route im Netzwerk folgen,
und wobei Zeitschlitze in Bezug auf den Zielknoten (D) nummeriert sind,
wobei der Knoten **dadurch gekennzeichnet ist, dass** er ferner umfasst:
- Mittel, die konfiguriert sind zum bidirektionalen Verbinden (401, 411, 421) zu einer zentralen photonischen Querverbindung zur Steuerinformationsverteilung (45), um Steuerinformationen mit anderen Knoten im Netzwerk gemeinsam zu nutzen;
- Speichermittel, die konfiguriert sind, Netzwerk-Zeitschlitznummerierungsinformationen zu speichern;
- Mittel, die konfiguriert sind, eine erste Gruppe von optischen Paketen auf einem gegebenen Wellenlängenkanal in Richtung zu einem Zielknoten (D) zu emittieren;
- Mittel, die konfiguriert sind, Steuerinformationen, einschließlich der Zeitschlitznummer des ersten emittierten optischen Pakets, und die Anzahl der für die Gruppe verwendeten Zeitschlitze an andere Knoten im Netzwerk rundzusenden;
- Mittel (505, 510), die konfiguriert sind, bei Bedarf eine Ausbreitungsverzögerung von optischen Paketen als ein Vielfaches von Zeitschlitzen einzuführen;
- Mittel, die konfiguriert sind, Steuerinformationen über eine zweite Gruppe von optischen Paketen, die von einem anderen Knoten im Netzwerk (S2) auf demselben Wellenlängenkanal an denselben Zielknoten (D) emittiert werden, zu empfangen; und
- Mittel, die konfiguriert sind, in Antwort auf die empfangenen Steuerinformationen, eine dritte Gruppe von optischen Paketen auf dem gleichen Wellenlängenkanal an den gleichen Zielknoten (D) zu emittieren, wobei die Mittel (505, 510), die konfiguriert sind, eine Ausbreitungsverzögerung einzuführen, verwendet werden, so dass kein Konflikt optischer Pakete entlang der festen optischen Route im Netzwerk auftritt.

11. Knoten (S1, S2) nach Anspruch 10, ferner umfassend eine lokale Datenbank, die in den Speichermitteln gespeichert ist, und Steuermittel, die konfiguriert sind zum:
• Aktualisieren der lokalen Datenbank in Abhängigkeit von den Steuerinformationen, die von dem anderen Knoten empfangen werden, wobei die Steuerinformationen die von dem anderen Knoten für einen oder mehrere Zielknoten verwendeten Zeitschlitze definieren;
• Bestimmen, basierend auf der aktualisierten lokalen Datenbank, von verfügbare Zeitschlitzen in Richtung zu dem einen oder mehreren Zielknoten; und
• Auswählen eines oder mehrerer der verfügbaren Zeitschlitze zum Emittieren der dritten Gruppe von optischen Paketen.

## Revendications

1. Procédé d'évitement de conflit de paquets optiques dans un réseau maillé de commutation de paquets optiques synchrone fonctionnant à des créneaux temporels définis, et comprenant des noeuds interconnectés, dont au moins deux noeuds sources (S1, S2) émettent des paquets optiques sur le même canal de longueur d'onde vers un seul noeud de destination (D),
les paquets optiques, une fois émis, suivant un trajet optique fixe prédéfini dans le réseau, et
le procédé étant en outre **caractérisé en ce que**, tous les noeuds du réseau étant connectés de manière bidirectionnelle (401, 411, 421) à un répartiteur photonique central pour la distribution d'informations de commande (45) de manière à partager des informations de commande,
et tous les noeuds du réseau comprenant en outre des moyens de retard (505, 510) configurés pour introduire à la demande un retard de propagation de paquets optiques sous la forme d'une pluralité de créneaux temporels,
le procédé comprenant les étapes de :
- la numérotation des créneaux temporels par rapport au noeud de destination (D) ;
- le stockage au niveau des noeuds sources (S1, S2) des informations de numérotation des créneaux temporels ;
- l'émission d'un premier groupe de paquets optiques à un premier des deux noeuds sources (S1), et la diffusion, vers le deuxième des deux noeuds sources, des informations de commande comprenant le numéro de créneau temporel d'un premier paquet optique émis, et le numéro des créneaux temporels utilisés pour le premier groupe ; et
- l'émission d'un deuxième groupe de paquets optiques au deuxième des deux noeuds sources (S2), à l'aide des moyens de retard (505, 510) en fonction des informations de commande reçues, de telle sorte qu'aucun conflit de paquets optiques ne se produise le long du trajet optique fixe dans le réseau.

2. Procédé selon la revendication 1, des moyens de retard (505, 510) introduisant un retard de propagation de telle sorte que le deuxième des deux noeuds sources (S2) ait, à partir du noeud de destination (D), une distance physique différente de celle entre le premier des deux noeuds sources (S1) et le noeud de destination (D).

3. Procédé selon la revendication 1 ou 2, les informations de commande diffusées par le premier des deux noeuds sources (S1) comprenant en outre :
- des informations relatives au noeud source du premier groupe de paquets optiques ;
- des informations relatives au noeud de destination du premier groupe de paquets optiques ; et
- des informations relatives au canal de longueur d'onde utilisé pour le premier groupe de paquets optiques.

4. Procédé selon l'une quelconque des revendications 1 à 3, l'étape de numérotation des créneaux temporels par rapport au noeud de destination (D) étant effectuée à l'installation du réseau, et chaque fois que le réseau est mis à jour en dimension par la suite.

5. Procédé selon l'une quelconque des revendications 1 à 4, comprenant en outre :
- la mise à jour au niveau du deuxième noeud source d'une base de données locale en fonction des informations de commande reçues du premier noeud source, les informations de commande définissant les créneaux temporels utilisés par le premier noeud source pour un ou plusieurs noeuds de destination ;
- la détermination au niveau du deuxième noeud source, à partir de la base de données locale mise à jour, des créneaux temporels disponibles vers un ou plusieurs noeuds de destination et
- la sélection au niveau du deuxième noeud source d'un ou plusieurs des créneaux temporels disponibles pour l'émission du deuxième groupe de paquets optiques.

6. Système d'évitement de conflit de paquets optiques dans un réseau maillé de commutation de paquets optiques synchrone fonctionnant à des créneaux temporels définis, et comprenant des noeuds interconnectés, dont au moins deux noeuds sources (S1, S2) émettent des paquets optiques sur le même canal de longueur d'onde vers un noeud cible unique (D),
les paquets optiques, une fois émis, suivant un trajet optique fixe prédéfini dans le réseau, et
les créneaux temporels relatifs au noeud de destination (D) étant numérotés, le système comprenant :
- un répartiteur photonique central pour la distribution d'informations de commande (45) avec lequel tous les noeuds du réseau sont connectés de manière bidirectionnelle (401, 411, 421) de manière à partager les informations de commande,
- des moyens de retard (505, 510) dans tous les noeuds du réseau, configurés pour introduire à la demande un retard de propagation de paquets optiques sous la forme d'une pluralité de créneaux temporels,
- des moyens de stockage dans tous les noeuds du réseau configurés pour stocker les informations de numérotation des créneaux temporels ;
- des moyens, au niveau du premier des deux noeuds sources (S1), configurés pour :
- émettre un premier groupe de paquets optiques ; et
- diffuser vers le deuxième des deux noeuds sources, les informations de commande, comprenant le numéro de créneau temporel d'un premier paquet optique émis, et le numéro des créneaux temporels utilisés pour le premier groupe ; et
- des moyens, au niveau du deuxième des deux noeuds sources (S2), configurés pour émettre un deuxième groupe de paquets optiques, à l'aide des moyens de retard (505, 510) en fonction des informations de commande reçues, de telle sorte qu'aucun conflit de paquets optiques ne se produise le long du trajet optique fixe dans le réseau.

7. Système selon la revendication 6, les moyens de retard (505, 510) comprenant un boîtier de réglage de longueur de fibre à la demande (LAB 505).

8. Système selon la revendication 6, les moyens de retard (505, 510) comprenant un tampon électronique à la demande de données pour l'ajustement de temps de propagation (EBF 510).

9. Système selon l'une quelconque des revendications 5 à 8, le deuxième noeud source (S2) comprenant en outre une base de données locale stockée dans les moyens de stockage et un moyen de commande configuré pour :
- mettre à jour la base de données locale en fonction des informations de commande reçues du premier noeud source, les informations de commande définissant les créneaux temporels utilisés par le premier noeud source pour un ou plusieurs noeuds de destination ;
- déterminer, à partir de la base de données locale mise à jour, les créneaux temporels disponibles vers un ou plusieurs noeuds de destination ; et
- sélectionner un ou plusieurs des créneaux temporels disponibles pour l'émission du deuxième groupe de paquets optiques.

10. Noeud (S1, S2) dans un réseau maillé de commutation de paquets optiques synchrone fonctionnant à des créneaux temporels définis, des paquets optiques, une fois émis par le noeud vers un noeud de destination (D), suivant un trajet optique fixe prédéfini dans le réseau et
des créneaux temporels relatifs au noeud de destination (D) étant numérotés, le noeud étant **caractérisé en ce qu'**il comprend en outre :
- des moyens configurés pour se connecter de manière bidirectionnelle (401, 411, 421) à un répartiteur photonique central pour la distribution d'informations de commande (45) de manière à partager des informations de commande avec d'autres noeuds dans le réseau ;
- des moyens de stockage configurés pour stocker les informations de numérotation des créneaux temporels du réseau ;
- des moyens configurés pour émettre un premier groupe de paquets optiques sur un canal de longueur d'onde donné vers un noeud de destination (D) ;
- des moyens configurés pour diffuser vers d'autres noeuds du réseau des informations de commande comprenant le numéro de créneau temporel du premier paquet optique émis et le numéro des créneaux temporels utilisés pour le groupe ;
- des moyens (505, 510) configurés pour introduire à la demande un retard de propagation de paquets optiques sous la forme d'une pluralité de créneaux temporels ;
- des moyens configurés pour recevoir des informations de commande relatives à un deuxième groupe de paquets optiques émis par un autre noeud du réseau (S2) sur le même canal de longueur d'onde vers le même noeud de destination (D) ; et
- des moyens configurés pour, en réponse aux informations de commande reçues, émettre un troisième groupe de paquets optiques sur le même canal de longueur d'onde vers le même noeud de destination (D), à l'aide des moyens (505, 510) configurés pour introduire un retard de propagation, de telle sorte qu'aucun conflit de paquets optiques ne se produise le long du trajet optique fixe dans le réseau.

11. Noeud (S1, S2) selon la revendication 10, comprenant en outre une base de données locale stockée dans le moyen de stockage et un moyen de commande configuré pour :
- mettre à jour la base de données locale en fonction des informations de commande reçues de l'autre noeud, les informations de commande définissant les créneaux temporels utilisés par l'autre noeud pour un ou plusieurs noeuds de destination ;
- déterminer, à partir de la base de données locale mise à jour, les créneaux temporels disponibles vers un ou plusieurs noeuds de destination ; et
- sélectionner un ou plusieurs des créneaux temporels disponibles pour l'émission du troisième groupe de paquets optiques.
